# DEMANDE DE BREVET EUROPEEN

(11) **EP 0 955 496 A1**
(43) Date de publication de la demande: **10.11.1999**
(21) Numéro de dépôt: 99420104.4
(22) Date de dépôt: 26.04.1999
(51) Int. Cl.: F17C 13/04, F16K 31/34, F17C 5/02

(54) **Dispositif de remplissage pour réservoir de gaz de pétrole liquéfié**

(30) Priorité: 07.05.1998 FR 9806048
(71) Demandeur: Clesse Industries, 63800 Cournon d'Auvergne (FR)
(72) Inventeur: Bonhomme, Alain, 63370 Lempdes (FR); Spiesser Gilbert, 63370 Orcet (FR)
(74) Mandataire: Maureau, Philippe

(57) **Abrégé**

Ce dispositif comprend un premier conduit (6) dont une extrémité peut être reliée à une canule d'amenée de gaz et dont l'autre extrémité forme un siège (8) pour une membrane (9) montée à l'intérieur d'une chambre (10) et sur laquelle prend appui un ressort (12) tendant à plaquer la membrane contre son siège, la membrane comportant en outre un orifice calibré (13) mettant en communication le premier conduit (6) et la chambre (10), un second conduit (14) qui, débouchant du côté de la membrane, à proximité du siège (8) de celle-ci, peut être mis en communication avec le premier conduit (6) si la membrane (9) est décollée de son siège, l'autre extrémité (16) du second conduit (14) étant en communication permanente avec l'intérieur du réservoir, un canal (17) de mise en communication de la chambre (10) et de l'intérieur du réservoir, et des moyens (20) de fermeture de la communication entre la chambre (10) et le réservoir par le canal (17, 34), lorsque le niveau de gaz dans le réservoir atteint une valeur prédéterminée.

## Description

L'invention concerne plus spécialement un dispositif permettant d'assurer automatiquement la coupure du remplissage lorsqu'un certain niveau de gaz est atteint à l'intérieur du réservoir, par exemple lorsque le niveau atteint 85 % de la hauteur du réservoir.

Un dispositif de remplissage de ce type est connu par le document FR 2 727 955 au nom de la Demanderesse. Ce dispositif comprend deux clapets successifs, dont un premier clapet, dans le sens du remplissage, est soumis à l'action d'un ressort qui tend à fermer le clapet en l'absence de pression de remplissage. Le second clapet est actionné par une tige, elle-même commandée par une came pivotante autour d'un axe horizontal et montée à l'extrémité d'un bras dont l'autre extrémité est solidaire d'un flotteur. Lorsque le niveau dans le réservoir atteint la valeur prédéterminée, par exemple 85 %, la tige échappe à la partie inférieure de la came, et entraîne le clapet inférieur qui se ferme et arrête l'écoulement du gaz dans le réservoir.

Si ce dispositif est satisfaisant, il s'agit d'un système mécanique dont les moyens de commande ne mettent pas en oeuvre la pression du gaz, ce qui se traduit par une fermeture brusque du clapet. En outre, ce dispositif nécessite, pour fonctionner, qu'il existe un différentiel de pression suffisant, supérieur à 1 bar (1 bar = 101 300 Pa) entre la pompe et le réservoir. Enfin, sur d'autres systèmes, il existe des joints en mouvement, avec les risques de collage de ceux-ci en raison de la présence de gaz de pétrole liquéfié.

Le but de l'invention est de fournir un dispositif de remplissage pour réservoir de gaz de pétrole liquéfié, qui ne comporte pas de joint en mouvement, donc pas de risque de collage en raison de la présence de gaz, qui ne présente pas de risque de blocage, dans lequel la pression de remplissage n'influe pas sur la qualité du fonctionnement, et qui assure une fermeture sans coups de bélier.

A cet effet, le dispositif qu'elle concerne, comprend :
- un premier conduit dont une extrémité comporte un orifice de remplissage pouvant être relié à une canule d'amenée de gaz et dont l'autre extrémité forme un siège pour une membrane de fermeture montée à l'intérieur d'une chambre et sur la face tournée du côté opposé au premier conduit de laquelle prend appui un ressort tendant à plaquer la membrane contre son siège, la membrane comportant en outre un orifice calibré mettant en communication le premier conduit et la chambre,
- un second conduit qui, débouchant du côté de la membrane, à proximité du siège de celle-ci, peut être mis en communication avec le premier conduit si la membrane est décollée de son siège, ou isolé vis à vis de celui-ci si la membrane est plaquée sur son siège, l'autre extrémité du second conduit étant en communication permanente avec l'intérieur du réservoir,
- un canal de mise en communication de la chambre et de l'intérieur du réservoir, et
- des moyens de fermeture de la communication entre la chambre et le réservoir par le canal, lorsque le niveau de gaz dans le réservoir atteint une valeur prédéterminée.

Lorsque la canule de remplissage est branchée sur l'orifice d'entrée, et que le liquide arrive de la pompe sous une pression d'environ 12 bars, il pousse la membrane pour la dégager de son siège, et le liquide passe du premier conduit vers le second conduit et vers le réservoir. Le trou calibré ménagé dans la membrane laisse passer le liquide qui descend dans le réservoir par le canal de mise en communication de la chambre et de l'intérieur du réservoir. Lorsqu'un niveau prédéterminé de gaz est atteint dans le réservoir, la communication entre la chambre et le réservoir par le canal est fermée. Le liquide ne pouvant plus s'échapper par le canal, la pression dans la chambre, derrière la membrane, devient égale à la pression de la pompe, exercée sur la face avant de la membrane. Il y a donc un équilibre des forces exercées par le liquide, de telle sorte que le ressort logé dans la chambre pousse la membrane sur son siège et ferme le passage pour le gaz.

Suivant une première forme d'exécution de ce dispositif le canal de mise en communication de la chambre et du réservoir débouche à son extrémité supérieure dans la chambre et à son extrémité inférieure dans une cavité communiquant avec le réservoir par un orifice dans lequel est monté un clapet qui est ouvert en période de remplissage et fermé lorsqu'un niveau prédéterminé est atteint dans le réservoir.

Avantageusement dans ce cas, le clapet appuie de haut en bas sur un siège et est prolongé vers le bas par une tige prenant appui sur une came solidaire d'une tige montée pivotante autour d'un axe horizontal et dont l'autre extrémité est équipée d'un flotteur, la came comportant un évidement au fond duquel la tige du clapet vient en appui lorsque le niveau prédéterminé de gaz est atteint, permettant ainsi la fermeture du clapet.

Il convient de noter un fonctionnement souple dû à la membrane, avec fermeture sans coups de bélier, ainsi que la faiblesse de l'effort exercé sur le flotteur, dans la mesure où celui-ci n'actionne pas un clapet de fermeture de l'alimentation principale en gaz liquéfié, mais simplement un petit clapet monté sur le canal de commande.

Selon une autre forme d'exécution de ce dispositif la chambre délimitée en partie par la membrane est également délimitée, du côté opposé à la membrane, par une paroi fixe dans laquelle est ménagé un orifice calibré, et de l'autre côté du laquelle est disposée une seconde chambre mise en communication par un canal avec l'intérieur du réservoir, cette seconde chambre contenant un obturateur actionné par un électro-aimant commandé par un détecteur électronique de niveau, de telle sorte que l'obturateur ferme le trou calibré de la paroi fixe dès que le niveau prédéterminé de gaz dans le réservoir est atteint.

Dans ce cas, il n'existe pas de commande mécanique de la fermeture à l'aide d'un flotteur, le niveau de fin de remplissage étant contrôlé par un détecteur électronique qui commande une électro-vanne pour fermer la communication entre la chambre située derrière la membrane et le réservoir.

De toute façon l'invention sera bien comprise à l'aide de la description qui suit, en référence au dessin schématique annexé représentant, à titre d'exemples non limitatifs, deux formes d'exécution de ce dispositif.
- Figure 1 est une vue schématique d'un dispositif actionné par un flotteur, monté dans un réservoir de gaz liquéfié,
- Figure 2 est une vue en coupe à échelle agrandie du dispositif selon l'invention en période de remplissage du réservoir,
- Figure 3 est une vue similaire à figure 2 en fin de remplissage,
- Figure 4 est une vue en coupe longitudinale d'un autre dispositif commandé par un détecteur électronique de niveau, en période de remplissage.

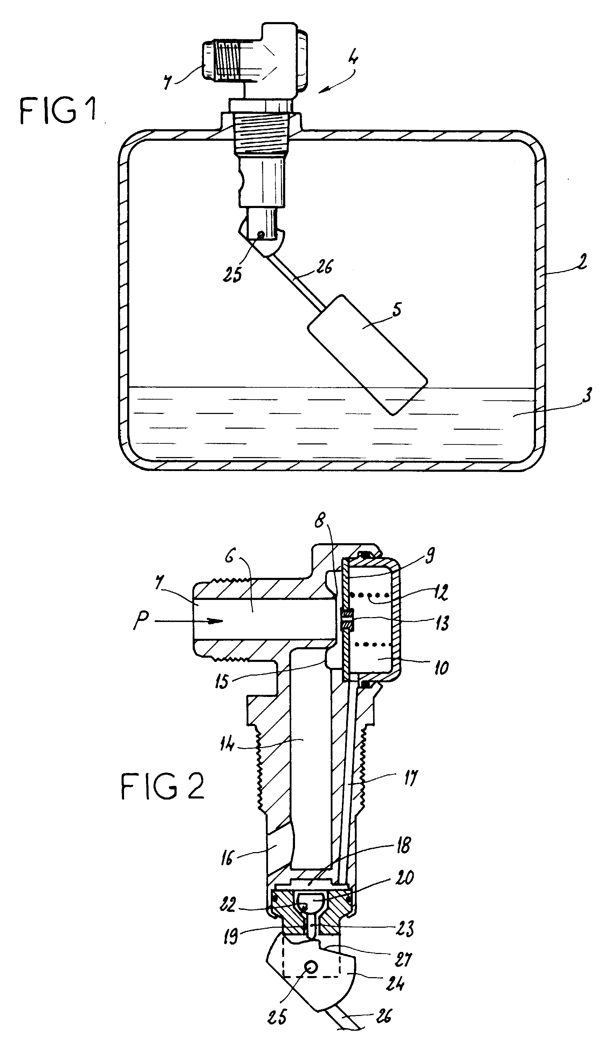

La figure 1 représente un réservoir 2 destiné à contenir du gaz liquéfié 3, le remplissage se faisant à l'aide d'un dispositif désigné par la référence générale 4, ce dispositif étant actionné vers sa position de fermeture, en fin de remplissage, c'est à dire lorsque le niveau de gaz atteint par exemple 85 %, par un flotteur 5.

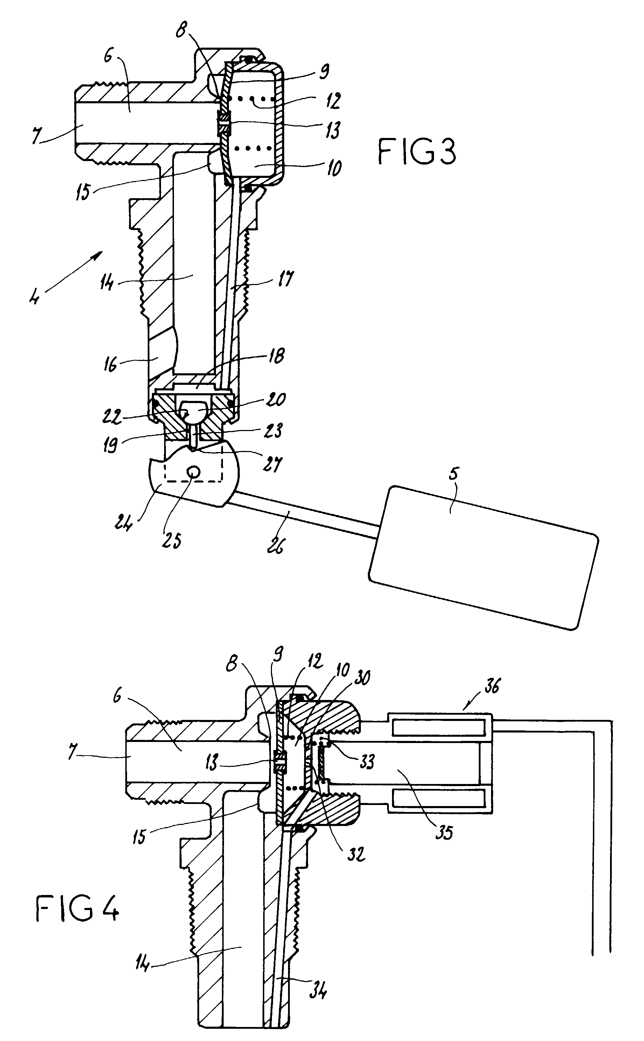

Le dispositif représenté aux figures 2 et 3 comprend un corps dans lequel est ménagé un premier conduit 6 dont une extrémité comporte un orifice de remplissage 7 pouvant être relié à une canule, non représentée au dessin, d'amenée de gaz à partir d'une pompe. L'autre extrémité de ce premier conduit forme un siège 8 pour une membrane étanche 9 de fermeture montée à l'intérieur d'une chambre 10. Sur la face de la membrane 9, tournée du côté opposé au premier conduit 6, prend appui un ressort 12 tendant à plaquer la membrane contre son siège 8. La membrane 9 comprend un trou central calibré 13 d'un diamètre de l'ordre de 1 mm.

Dans le corps du dispositif est également ménagé un second conduit 14, d'orientation verticale, qui débouche en partie haute, en 15, du côté de la membrane, à proximité du siège 8 de celle-ci. Les conduits 6 et 14 peuvent être mis en communication si la membrane est décollée de son siège, comme montré à la figure 2, ou isolés si la membrane est plaquée sur son siège comme montré à la figure 3. L'autre extrémité 16 du second conduit 14 est en communication permanente avec l'intérieur du réservoir. Dans la paroi inférieure de la chambre 10, débouche un canal 17, d'orientation verticale, dont l'extrémité inférieure débouche dans une cavité 18. Cette cavité 18 communique avec le réservoir 2 par l'intermédiaire d'un orifice 19 pouvant être obturé par un clapet 20. Le clapet 20 appuie de haut en bas sur un siège 22 et est prolongé vers le bas par une tige 23 prenant appui sur une came 24 montée pivotante autour d'un axe horizontal 25. La came 24 est solidaire d'une tige 26 à l'autre extrémité de laquelle est monté le flotteur 5. Comme montré aux dessins, la came 24 comporte un évidement 27.

Le fonctionnement de ce dispositif est le suivant.

Lorsque le gaz liquide arrive de la pompe par l'orifice de remplissage 7 avec une pression P d'environ 12 bars, il pousse la membrane 9 et le liquide passe par l'orifice 15 dans le conduit 14 et va dans le réservoir. Le trou calibré 13 laisse passer du liquide qui descend par le canal 17 dans la cavité 18, puis passe de celle-ci dans le réservoir par l'orifice 19, le clapet 20 étant maintenu en position haute par la came 24, comme montré à la figure 2. Lorsque le liquide arrive au niveau prédéterminé de remplissage, le flotteur a fait pivoter la came 24 de telle sorte que la tige 23 du clapet 20 tombe dans l'évidement 27 de la came. Le clapet 20 passe alors en position de fermeture, et ne permet plus le passage de liquide de la chambre 10 vers le réservoir. La pression à l'intérieur de la chambre 10 devient donc égale à la pression débitée par la pompe, et il s'établit un équilibre de part et d'autre de la membrane. La force résultante est celle du ressort 12 qui pousse la membrane contre le siège 8 et ferme le passage entre le premier conduit 6 et le second conduit 14.

La figure 4 représente une variante d'exécution dans laquelle les mêmes éléments sont désignés par les mêmes références que précédemment.

Dans cette forme d'exécution, la chambre 10 est délimitée du côté opposé à la membrane par une paroi fixe 30 dans laquelle est ménagé un orifice calibré 32 débouchant dans une seconde chambre 33. Cette seconde chambre 33 communique par un canal vertical 34 avec l'intérieur du réservoir. La seconde chambre 33 contient un obturateur 35 actionné par un électro-aimant 36 lui-même commandé par un détecteur électronique de niveau non représenté au dessin. En période de remplissage, l'ensemble se trouve dans la position représentée à la figure 4, du liquide traversant les orifices calibrés 13 et 32 et descendant dans le réservoir par le canal 34. Lorsque le niveau prédéterminé est atteint, l'électro-aimant assure le déplacement du clapet 35 dans un sens de fermeture de l'orifice 32, de telle sorte que du liquide ne peut plus passer de la chambre 10 vers le réservoir par le canal 34. ll s'établit un équilibre de pression de part et d'autre de la membrane 9, permettant au ressort 12 d'agir pour plaquer la membrane contre son siège 8, et fermer la communication entre le premier conduit 6 et le second conduit 14.

Comme il ressort de ce qui précède, l'invention apporte une grande amélioration à la technique existante en fournissant un dispositif assurant automatiquement la fermeture du remplissage en gaz liquide d'un réservoir, de structure simple, ne possédant pas de joint en mouvement, ne comportant pas de risque de blocage de clapet de fermeture du passage du fluide, ne nécessitant pas une pression minimale de remplissage pour fonctionner, et assurant une fermeture sans coups de bélier.

Comme il va de soi l'invention ne se limite pas aux seules formes d'exécution de ce dispositif, décrites ci-dessus à titre d'exemples, elle en embrasse au contraire toutes les variantes.

## Revendications

1. Dispositif de remplissage pour réservoir de gaz de pétrole liquéfié, **caractérisé en ce qu**'il comprend :
- un premier conduit (6) dont une extrémité comporte un orifice de remplissage (7) pouvant être relié à une canule d'amenée de gaz et dont l'autre extrémité forme un siège (8) pour une membrane de fermeture (9) montée à l'intérieur d'une chambre (10) et sur la face tournée du côté opposé au premier conduit de laquelle prend appui un ressort (12) tendant à plaquer la membrane contre son siège, la membrane comportant en outre un orifice calibré (13) mettant en communication le premier conduit (6) et la chambre (10),
- un second conduit (14) qui, débouchant du côté de la membrane, à proximité du siège (8) de celle-ci, peut être mis en communication avec le premier conduit (6) si la membrane (9) est décollée de son siège, ou isolé vis à vis de celui-ci si la membrane (9) est plaquée sur son siège (8), l'autre extrémité (16) du second conduit (14) étant en communication permanente avec l'intérieur du réservoir,
- un canal (17, 34) de mise en communication de la chambre (10) et de l'intérieur du réservoir, et
- des moyens (20, 35) de fermeture de la communication entre la chambre (10) et le réservoir par le canal (17, 34), lorsque le niveau de gaz dans le réservoir atteint une valeur prédéterminée.

2. Dispositif selon la revendication 1, caractérisé en ce que le canal (17) de mise en communication de la chambre (10) et du réservoir débouche à son extrémité supérieure dans la chambre (10) et à son extrémité inférieure dans une cavité (18) communiquant avec le réservoir par un orifice (19) dans lequel est monté un clapet (20) qui est ouvert en période de remplissage et fermé lorsqu'un niveau prédéterminé est atteint dans le réservoir.

3. Dispositif selon la revendication 2, caractérisé en ce que le clapet (20) appuie de haut en bas sur un siège (22) et est prolongé vers le bas par une tige (23) prenant appui sur une came (24) solidaire d'une tige (26) montée pivotante autour d'un axe horizontal et dont l'autre extrémité est équipée d'un flotteur (5), la came (24) comportant un évidement (27) au fond duquel la tige (23) du clapet (20) vient en appui lorsque le niveau prédéterminé de gaz est atteint, permettant ainsi la fermeture du clapet.

4. Dispositif selon la revendication 1, caractérisé en ce que la chambre (10) délimitée en partie par la membrane (9) est également délimitée, du côté opposé à la membrane, par une paroi fixe (30) dans laquelle est ménagé un orifice calibré (32), et de l'autre côté du laquelle est disposée une seconde chambre (33) mise en communication par un canal (34) avec l'intérieur du réservoir, cette seconde chambre (33) contenant un obturateur actionné par un électro-aimant (36) commandé par un détecteur électronique de niveau, de telle sorte que l'obturateur (35) ferme le trou calibré (32) de la paroi fixe (30) dès que le niveau prédéterminé de gaz dans le réservoir est atteint.
